# EUROPEAN PATENT APPLICATION

(11) **EP 4 707 109 A1**
(43) Date of publication of application: **11.03.2026**
(21) Application number: 24864742.2
(22) Date of filing: 13.09.2024
(51) Int. Cl.: B60W 60/00

(54) **VEHICLE CONTROL METHOD AND APPARATUS, DEVICE AND READABLE STORAGE MEDIUM**

(30) Priority: 13.09.2023 CN 202311180707
(71) Applicant: Zhejiang Geely Holding Group Co., Ltd., Hangzhou, Zhejiang 310051 (CN); Ningbo Geely Automobile Research & Development Co. Ltd., Hangzhou Bay New District Ningbo 315336 (CN)
(72) Inventor: XU, Kunfeng, Hangzhou Bay New District Ningbo, Zhejiang 315336 (CN); HU, Weilong, Hangzhou Bay New District Ningbo, Zhejiang 315336 (CN)
(74) Representative: Elzaburu S.L.P.
(86) International application number: PCT/CN2024/118770
(87) International publication number: WO 2025/056028

(57) **Abstract**

The present application provides a method and apparatus for controlling a vehicle, a device, and a readable storage medium. The vehicle currently executes a target intelligent driving function to perform intelligent driving. The method includes: acquiring a state of a target state machine corresponding to the target intelligent driving function and chassis data, where the target state machine is a driving state machine or a parking state machine; acquiring a state of an algorithm state machine of at least one function module corresponding to the target intelligent driving function according to the state of the target state machine and the chassis data, where the state of the algorithm state machine is used to represent a state of the function module; determining a task flow to be executed by the function module according to the state of the algorithm state machine; executing the task flow to acquire an execution result of the task flow; performing intelligent driving according to the execution result of the task flow. The present application may achieve a reduced coupling degree among algorithms for intelligent driving functions.

## Description

This application claims priority to Chinese Patent Application No. 2023111807070, filed with the China National Intellectual Property Administration on September 13, 2023, and entitled "METHOD AND APPARATUS FOR CONTROLLING VEHICLE, DEVICE AND READABLE STORAGE MEDIUM", which is hereby incorporated by reference in its entirety.

### TECHNICAL FIELD

The present application relates to intelligent driving technology, in particular, to a method and apparatus for controlling a vehicle, a device, and a readable storage medium.

### BACKGROUND

With the development of automotive intelligent driving technology, especially an advanced driving assistance system (Advanced Driving Assistance System, ADAS), a vehicle can identify, perceive, and process environmental information around the vehicle through various sensors, and perform analysis and decision-making through a computer algorithm, thereby realizing a series of the vehicle's intelligent driving functions, such as adaptive cruise control (Adaptive Cruise Control, ACC), auto parking assist (Auto Parking Assist, APA) and so on.

Currently, in the prior art, algorithms that implement the intelligent driving functions based on data from multiple sensors across different application scenarios are coupled together, resulting in low efficiency in algorithm development and updating. For example, when it is required to update a processing algorithm for data from a certain sensor, all algorithms for intelligent driving functions using that sensor's data need to be updated, leading to low update efficiency. In other words, in the prior art, algorithms for intelligent driving functions are highly coupled.

### SUMMARY

An objective of the present application is to provide a method and apparatus for controlling a vehicle, a device, and a readable storage medium, which are served to achieve a reduced coupling degree among algorithms for intelligent driving functions.

In a first aspect, the present application discloses a method for controlling a vehicle. The vehicle currently executes a target intelligent driving function to perform intelligent driving. The method includes:
acquiring a state of a target state machine corresponding to the target intelligent driving function and chassis data, where the target state machine is a driving state machine or a parking state machine;
acquiring a state of an algorithm state machine of at least one function module corresponding to the target intelligent driving function according to the state of the target state machine and the chassis data, where the state of the algorithm state machine is used to represent a state of the function module;
determining a task flow to be executed by the function module according to the state of the algorithm state machine;
executing the task flow to acquire an execution result of the task flow;
performing intelligent driving according to the execution result of the task flow.

Optionally, the determining the task flow to be executed by the target function module according to the state of the algorithm state machine, includes:
determining an event to be executed from an event library of the function module according to the state of the algorithm state machine, where an event in the event library includes at least one operator directed graph, where the operator directed graph is used to describe operators required for executing the event and an execution sequence among the operators;
chaining, according to an operator directed graph included in the event to be executed, identifiers of operators to obtain the task flow to be executed.

Optionally, the executing the task flow to acquire the execution result of the task flow, includes:
invoking operators corresponding to the identifiers of the operators from an operator library according to the identifiers of the operators in the task flow;
executing the operators corresponding to the respective identifiers of the operators of the task flow to acquire the execution result of the task flow.

Optionally, the acquiring the state of the algorithm state machine of the at least one function module corresponding to the target intelligent driving function according to the state of the target state machine and the chassis data, includes:
acquiring the state of the algorithm state machine of the at least one function module corresponding to the target intelligent driving function from a state library according to the state of the target state machine and the chassis data, where the state library pre-stores a mapping relationship between the state of the target state machine and the chassis data, and states of algorithm state machines of multiple function modules.

Optionally, the executing the task flow includes:
creating a thread corresponding to the task flow via a thread configuration policy in an application framework of an autonomous driving computing platform;
executing the thread corresponding to the task flow.

Optionally, the method further includes:
performing a management on the created thread corresponding to the task flow via a thread scheduling policy and/or a thread monitoring policy in the application framework of the autonomous driving computing platform.

Optionally, the thread configuration policy includes a data reception and publication relationship between task flows;
where executing the thread corresponding to the task flow, includes:
acquiring a data callback interface and a publication interface using a registration callback mechanism and in accordance with the data reception and publication relationship between task flows;
acquiring input data for the thread corresponding to the task flow using the data callback interface, and executing the thread corresponding to the task flow to obtain output data corresponding to the task flow;
publishing the output data corresponding to the task flow using the publication interface.

In a second aspect, the present application discloses an apparatus for controlling a vehicle. The vehicle currently executes a target intelligent driving function to perform intelligent driving. The apparatus includes:
a first acquiring module, configured to acquire a state of a target state machine corresponding to the target intelligent driving function and chassis data, where the target state machine is a driving state machine or a parking state machine;
a second acquiring module, configured to acquire a state of an algorithm state machine of at least one function module corresponding to the target intelligent driving function according to the state of the target state machine and the chassis data, where the state of the algorithm state machine is used to represent a state of the function module;
a determining module, configured to determine a task flow to be executed by the function module according to the state of the algorithm state machine;
an executing module, configured to execute the task flow to acquire an execution result of the task flow;
a processing module, configured to perform intelligent driving according to the execution result of the task flow.

In a third aspect, the present application discloses an electronic device. The electronic device includes: a processor, and a memory communicatively connected with the processor;
where the memory stores a computer-executable instruction;
the computer-executable instruction stored in the memory is executed by the processor to implement the method for controlling a vehicle according to any of the first aspect.

In a fourth aspect, the present application discloses a computer-readable storage medium. The computer-readable storage medium stores a computer-executable instruction. When the computer-executable instruction is executed by a processor, the method for controlling a vehicle according to any of the first aspect is implemented.

In a fifth aspect, the present application discloses a computer program product, including a computer program, when the computer program is executed by a processor, the method for controlling a vehicle according to any of the first aspect is implemented.

In a sixth aspect, the present application discloses a chip, the chip stores a computer program thereon, when the computer program is executed by the chip, the method for controlling a vehicle according to any of the first aspect is implemented.

In combination with the above technical solutions, according to the method and apparatus for controlling a vehicle, the device, and the readable storage medium provided in the present application, the task flow to be executed by a respective function module is determined based on the state of the algorithm state machine of at least one function module corresponding to the intelligent driving function, thereby obtaining the execution result of the task flow of the respective function module, and intelligent driving is performed based on the execution result. In the method, the algorithms for intelligent driving functions are partitioned into multiple function modules. On this basis, the combinations of algorithms corresponding to multiple intelligent driving functions across different application scenarios are simplified to the combinations of task flows of multiple function modules. This decouples the implementation algorithms of individual function modules across different application scenarios, and splits them into multiple task flows. When algorithms corresponding to intelligent driving functions across different application scenarios are to be developed and updated, only the task flows of individual function modules need to be developed and updated, there is no need to update and develop algorithms corresponding to intelligent driving functions across different application scenarios, thereby achieving a reduced coupling degree among the algorithms for intelligent driving functions and improving the development and update efficiency of algorithms for intelligent driving functions.

### BRIEF DESCRIPTION OF DRAWINGS

FIG. 1 is a schematic architectural diagram of an intelligent driving control system.
FIG. 2 is a schematic structural diagram of an autonomous driving computing platform.
FIG. 3 is a flowchart of a method for controlling a vehicle provided in the present application.
FIG. 4 is a flowchart of another method for controlling a vehicle provided in the present application.
FIG. 5 is a schematic structural diagram of a function module provided in the present application.
FIG. 6 is a schematic structural diagram of an apparatus for controlling a vehicle provided in the present application.
FIG. 7 is a schematic structural diagram of an electronic device provided in the present application.

### DESCRIPTION OF EMBODIMENTS

Firstly, explanations are provided for terms involved in the present application:
ADAS: uses various sensors installed on a vehicle, such as a millimeter-wave radar, a lidar, etc., to collect environmental data around the vehicle while driving, perform identification, perception, and processing of static and dynamic objects, and perform analysis and decision-making through computer algorithms, thereby realizing a series of vehicle intelligent driving functions.
State machine: a state transition diagram that can perform, based on a control signal, a state transition in accordance with a pre-set state.

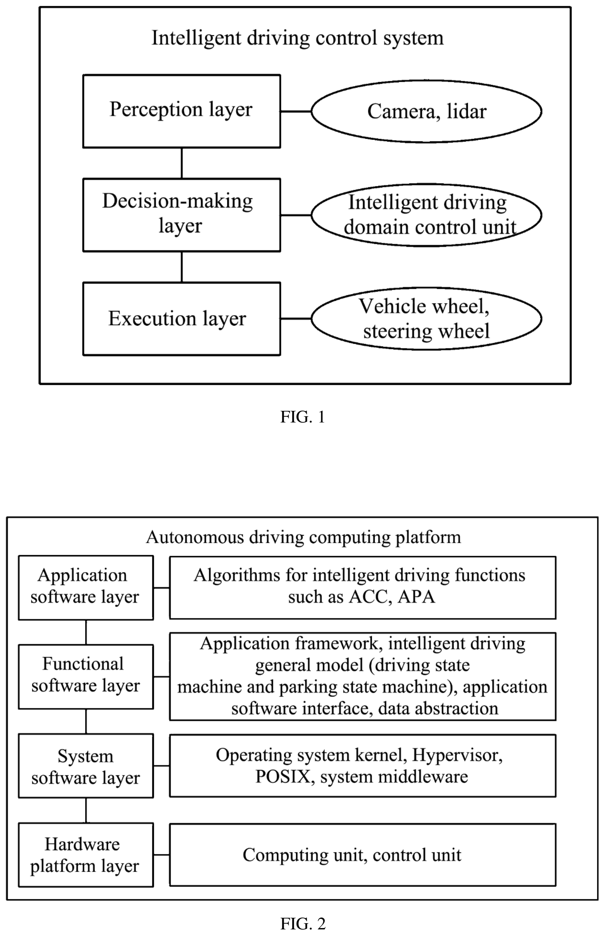

FIG. 1 is a schematic architectural diagram of an intelligent driving control system. As shown in FIG. 1, the intelligent driving control system is partitioned into a perception layer, a decision-making layer, and an execution layer.

The aforementioned perception layer is used to perceive changes in the external environment and acquire environmental information through a hardware system. The hardware system may be, for example, a sensor such as a camera, a lidar, etc.

The aforementioned decision-making layer formulates an appropriate control strategy by using information from the perception layer. The decision-making layer includes an intelligent driving domain control unit (Domain Control Unit, DCU). The intelligent driving DCU may, for example, include an integrated driving and parking DCU, or include a driving DCU and a parking DCU, which is not limited herein. The intelligent driving DCU may be a system on chip (System on Chip, SoC) or a microcontroller unit (Microcontroller Unit, MCU). An execution entity of the present application is the intelligent driving DCU.

The intelligent driving DCU deploys an autonomous driving computing platform. The autonomous driving computing platform includes various algorithms, communication protocols, middlewares, etc., corresponding to intelligent driving functions.

The aforementioned execution layer issues a command to the vehicle based on a decision result from the decision-making layer, to cause the vehicle to perform intelligent driving. The execution layer includes a vehicle wheel, a steering wheel, etc.

FIG. 2 is a schematic structural diagram of an autonomous driving computing platform. As shown in FIG. 2, the autonomous driving operating system includes a hardware platform layer, a system software layer, a functional software layer, and an application software layer.

The aforementioned hardware platform layer includes a computing unit and a control unit, providing hardware support for the aforementioned software layers. The computing unit may be, for example, a CPU, a GPU, an FPGA, etc., and the control unit may be, for example, an MCU, etc.

The aforementioned system software layer includes an operating system kernel, a Hypervisor (Hypervisor), a portable operating system interface (POSIX), a system middleware, etc.

The operating system kernel may be, for example, various operating system kernels such as Linux and VxWorks. The Hypervisor is a hardware virtualization technology that manages and virtualizes hardware resources (such as a CPU, memory, and peripherals, etc.) and provides usage for multiple operating system kernels. The POSIX is a standard that defines operating system interfaces and functions, aiming to enable applications to be ported across different operating systems. The system middleware is used to manage computing resources and network communication, and may include, for example, a distributed communication service, to provide data and information exchange services between the functional software layer and the application software layer in a publish/subscribe manner.

The aforementioned functional software layer includes an application software interface, an intelligent driving general model, an application framework, data abstraction, etc.

The application software interface refers to an interface between hardware and the aforementioned application software layer. Through a unified application software interface, invoking and services are provided for the application software, enabling the development and execution of application software in the above application software layer to be independent of specific sensor and vehicle model.

The intelligent driving general model is a model abstraction of general processes in intelligent driving, such as intelligent cognition, intelligent decision-making, and intelligent control. The intelligent driving general model includes a perception model, a decision-making model, and a planning model. The decision-making model includes a driving state machine and a parking state machine.

The application framework includes thread scheduling, a connected cloud control service, information security, data replay abstraction, etc., which can abstract, deploy, and drive the algorithm in the intelligent driving general model, solving problems of cross-domain, cross-platform deployment and computation.

The data abstraction provides various different data sources for the intelligent driving general model in the upper-layer by performing standardized processing on data of sensors, actuators, vehicle states, maps, etc.

The aforementioned application software layer is responsible for achieving intelligent driving functions, including algorithms corresponding to intelligent driving functions across various application scenarios.

Currently, algorithms for intelligent driving functions across different application scenarios within the application software layer are coupled together. For example, in a scenario where the vehicle is driving normally, the intelligent driving DCU executes an algorithm corresponding to an ACC function. However, if a sudden situation occurs during normal driving of the vehicle, such as a pedestrian appearing on the road, braking is required. At this time, an algorithm corresponding to such scenario includes the algorithm corresponding to the ACC function and an algorithm for braking. That is, algorithms for intelligent driving functions are coupled based on multiple application scenarios.

In this approach, it is not convenient to update and develop algorithms. For example, when it is necessary to update a processing algorithm for data of a certain sensor, all algorithms for intelligent driving functions using that sensor's data need to be updated, resulting in low update efficiency. When an algorithm corresponding to an intelligent driving function is developed, it is necessary to consider its coupling with algorithms corresponding to other intelligent driving functions across different application scenarios, resulting in low algorithm development efficiency. The reason for this phenomenon is the high coupling degree among algorithms for intelligent driving functions.

In view of this, the present application provides a method for controlling a vehicle. Based on multiple function modules of the algorithms for intelligent driving functions, the algorithms of individual function modules are decoupled, the algorithms corresponding to individual function modules are partitioned into multiple task flows, and the combinations of multiple task flows are used to implement intelligent driving functions across different scenarios. When algorithms are to be developed and updated, only the task flows of individual function modules need to be developed and updated, there is no need to develop and update the algorithms for the respective intelligent driving function across different scenarios, thereby achieving decoupling of algorithms for intelligent driving functions and improving the development and update efficiency of the algorithms.

The technical solutions of the present application and how they solve the above technical problems will be described in detail below in combination with specific embodiments. The following specific embodiments can be combined with each other, and the same or similar concepts or processes may not be repeated in some embodiments. The embodiments of the present application will be described below with reference to the drawings.

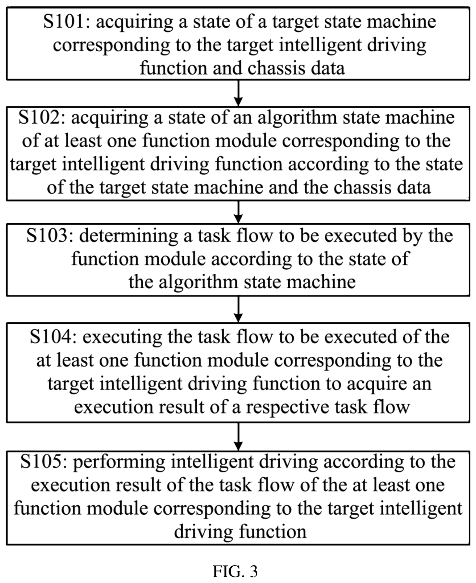

FIG. 3 is a flowchart of a method for controlling a vehicle provided in the present application. In the application software layer, algorithms for intelligent driving functions based on various application scenarios are partitioned into multiple function modules. The algorithm included in each function module is used to implement one type of sub-function, for example, the algorithms can be partitioned into a perception module, a localization module, a fusion module, a planning module, a control module, etc. The implementation of the intelligent driving function corresponds to at least one function module. The vehicle currently executes a target intelligent driving function to perform intelligent driving. As shown in FIG. 1, the method includes:
S101: acquiring a state of a target state machine corresponding to the target intelligent driving function and chassis data.

The aforementioned target intelligent driving function refers to an intelligent driving function currently used by the vehicle. The target intelligent driving function may be, for example, triggered by a user through a vehicle terminal, or implemented by the vehicle's intelligent driving DCU after deciding based on the vehicle state and current environmental information.

The aforementioned target state machine is a driving state machine or a parking state machine. It should be understood that each intelligent driving function corresponds to either a driving state machine or a parking state machine as a target state machine for vehicle state decision-making. The intelligent driving DCU will switch the target state machine corresponding to the target intelligent driving function into a state corresponding to the target intelligent driving function according to the intelligent driving function currently used by the vehicle. For example, the target intelligent driving function currently used by the vehicle is an ACC function, and at this time, the target state machine is a driving state machine, and the state of the target state machine is an ACC state.

The aforementioned intelligent driving DCU can directly acquire, according to the target intelligent driving function, the state of the corresponding target state machine from the above driving state machine or parking state machine. Alternatively, a publish and subscribe relationship for the state data, of the driving state machine and the parking state machine, can be preset, so that when the state data changes, it is automatically sent to the function modules that have subscribed to the data.

The aforementioned chassis data refers to data related to a chassis of the vehicle, for example, it can be a chassis fault identifier, a door open/close identifier, a vehicle hood open/close identifier, a vehicle trunk lid open/close identifier, etc. It should be noted that the chassis data includes, but is not limited to, the vehicle body's state and the vehicle's software or hardware-related data such as chassis faults, and may also include other types of chassis data, which can be set according to actual requirements and is not limited herein.

The aforementioned chassis data may be acquired by the intelligent driving DCU from the application interface of the above autonomous driving computing platform, and the application interface is used for implementing interaction between the application software layer and the vehicle's chassis data. Alternatively, a publish and subscribe relationship for the chassis data of the application interface can be preset, so that when the chassis data changes, it is automatically sent to the function modules that have subscribed to the data.

It should be noted that an identifier can be preset in the chassis data to indicate that the chassis has no faults.

S 102: acquiring a state of an algorithm state machine of at least one function module corresponding to the target intelligent driving function according to the state of the target state machine and the chassis data.

The aforementioned state of the algorithm state machine is used to represent a state of the function module corresponding to the algorithm state machine. It should be noted that each function module has its own preset algorithm state machine, and the state of the function module can be used to represent the function to be implemented by the function module.

Regarding how to acquire the state of the algorithm state machine of the function module, in a possible implementation, a state library for a respective function module is preset, the state library stores a mapping relationship between the states of the algorithm state machine of the function module, and the state of the target state machine and the chassis data. The intelligent driving DCU can acquire the state of the algorithm state machine of the function module from the state library corresponding to the function module according to the state of the target state machine and the chassis data.

In another possible implementation, a state library is preset, which stores a mapping relationship between the state of the target state machine and the chassis data, and the state of the algorithm state machine of each function module. The intelligent driving DCU can acquire the state of the algorithm state machine of each function module from the state library according to the state of the target state machine and the chassis data.

Regarding how to acquire the state of the algorithm state machine of the at least one function module corresponding to the target intelligent driving function, in one possible implementation, a mapping relationship between the intelligent driving function and the function module corresponding to the intelligent driving function is preset in advance. The above intelligent driving DCU can acquire the identifier of the at least one function module corresponding to the intelligent driving function according to the mapping relationship between the intelligent driving function and its corresponding function module. Then, according to the state of the target state machine and the chassis data, and the identifier of the at least one function module, the above intelligent driving DCU adopts the aforementioned method of acquiring the state of the algorithm state machine of the function module to acquire the state of the algorithm state machine of the at least one function module corresponding to the intelligent driving function.

In another possible implementation, after the algorithm state machine of the function module switches its state, a state switch response is sent to the intelligent driving DCU. The state switch response includes an identifier of the function module. The intelligent driving DCU adopts, according to the received state switch response, the aforementioned method of acquiring the state of the algorithm state machine of the function module to acquire the state of the algorithm state machine of the at least one function module corresponding to the intelligent driving function.

S103: determining a task flow to be executed by the function module according to the state of the algorithm state machine.

The aforementioned task flow to be executed refers to a task flow which, under the state of the algorithm state machine, the function module needs to execute to implement the function corresponding to the state.

In one possible implementation, an event library of the function module is preset for the function module, the event library stores a mapping relationship between the state of the function module and an event. The event is used to represent a function of the function module. The above intelligent driving DCU can acquire the event corresponding to the state of the algorithm state machine from the event library of the function module according to the state of the algorithm state machine of the function module, and take that event as the task flow to be executed by the function module.

In another possible implementation, a master event library is preset, the master event library stores a mapping relationship between states of the algorithm state machines of the function modules and events. The above intelligent driving DCU can acquire the event corresponding to the state of the algorithm state machine from the master event library according to the state of the algorithm state machine of the function module, and take that event as the task flow to be executed by the function module.

In another possible implementation, a task flow library of the function module is preset for the function module, the task flow library stores a mapping relationship between various task flows of the function module and the states of the algorithm state machine, and each task flow is used to implement a function of the function module. The above intelligent driving DCU can determine the task flow to be executed by the function module from the task flow library according to the state of the algorithm state machine of the function module.

S104: executing the task flow to be executed of the at least one function module corresponding to the target intelligent driving function to acquire an execution result of a respective task flow.

In one possible implementation, the task flow to be executed includes multiple operators, and a combination of these multiple operators is used to implement a function of the function module. The operators of the task flow are directly executed to acquire the execution result of the task flow.

In another possible implementation, the task flow to be executed includes identifiers of multiple operators. The operators corresponding to identifiers of these operators are executed to acquire the execution result of the task flow.

S 105: performing intelligent driving according to the execution result of the task flow of the at least one function module corresponding to the target intelligent driving function.

Optionally, as mentioned above, the at least one function module corresponding to the target intelligent driving function includes a control module. The control module may generate a control signal according to the execution result(s) of other function module(s) corresponding to the target intelligent driving function, and send the control signal, via the application software interface and using a communication method set by the system middleware of the above autonomous driving computing platform, to the execution layer of the intelligent driving control system, to enable the vehicle to perform intelligent driving.

According to the method for controlling a vehicle provided in the present application, the task flow to be executed by a respective function module is determined based on the state of the algorithm state machine of at least one function module corresponding to the intelligent driving function, thereby obtaining the execution result of the task flow of the respective function module, and intelligent driving is performed based on the execution result. In the method, the algorithms for intelligent driving functions are partitioned into multiple function modules. On this basis, the combinations of algorithms corresponding to multiple intelligent driving functions across different application scenarios are simplified to the combinations of task flows of multiple function modules. This decouples the implementation algorithms of individual function modules across different application scenarios, and splits them into multiple task flows. When algorithms corresponding to intelligent driving functions across different application scenarios are to be developed and updated, only the task flows of individual function modules need to be developed and updated, there is no need to update and develop algorithms corresponding to intelligent driving functions across different application scenarios, thereby achieving a reduced coupling degree among the algorithms for intelligent driving functions and improving the development and update efficiency of algorithms for intelligent driving functions.

In the following, an example is taken where an event library of the function module is preset for the function module, to explain how to determine the task flow to be executed by the target function module according to the state of the algorithm state machine, execute the task flow, and obtain the execution result of the task flow.

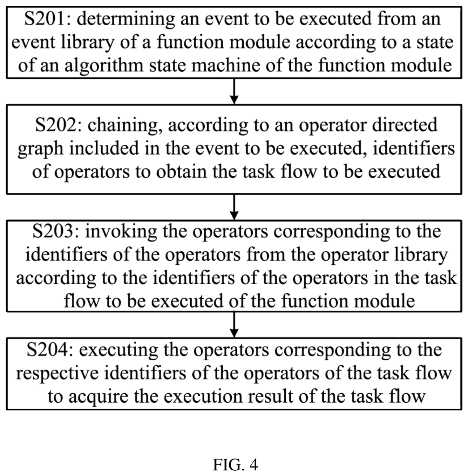

FIG. 4 is a flowchart of another method for controlling a vehicle provided in the present application. As shown in FIG. 4, the method includes:
S201: determining an event to be executed from an event library of a function module according to a state of an algorithm state machine of the function module.

Optionally, the algorithm of the function module is decoupled into multiple operators according to the function of the function module, and the function of the function module is achieved using a combination of these operators. When the algorithm of the function module is developed and updated, only operators need to be developed and updated, thus further decoupling the algorithm of the function module and improving the development and update efficiency of the algorithm of the intelligent driving function.

The event in the aforementioned event library includes at least one operator directed graph. The operator directed graph is used to describe operators required for executing the event and an execution sequence among the operators. The operator directed graph includes identifiers of the operators required for executing the event and the execution sequence among the identifiers of the operators.

In one possible implementation, an operator library for the function module is preset, the operator library stores operators and the operators' identifiers of the function module. In another possible implementation, a master operator library is preset, the master operator library stores operators and the operators' identifiers of individual function modules.

As mentioned before, the event library has a preset mapping relationship between the event and the state of the algorithm state machine. The event to be executed can be determined according to the mapping relationship between the state of the algorithm state machine and the event.

S202: chaining, according to an operator directed graph included in the event to be executed, identifiers of operators to obtain the task flow to be executed.

For example, chaining the identifiers of the operators according to the execution sequence among the identifiers of the operators in the operator directed graph included in the event to be executed, to obtain the task flow to be executed.

Through the above method, the event to be executed can be determined according to the event library of the function module, and then the task flow to be executed is determined according to the operator directed graph included in the event. This approach turns the algorithm of the function module into operators, and establishes the task flow to be executed through operators' chaining, achieving further decoupling of the algorithm of the function module.

S203: invoking the operators corresponding to the identifiers of the operators from the operator library according to the identifiers of the operators in the task flow to be executed of the function module.

The aforementioned operator library may be the operator library of the function module or the master operator library as mentioned above.

S204: executing the operators corresponding to the respective identifiers of the operators of the task flow to acquire the execution result of the task flow.

The aforementioned steps S201-204 are adopted to execute the task flow to be executed of the at least one function module corresponding to the target intelligent driving function and acquire the execution result of the respective task flow.

According to the method for controlling a vehicle provided in the present application, the algorithm of the function module is turned into operators, the operators are stored in the operator library, and the operators are chained to form the task flow to be executed by the function module. When developing and updating the algorithm of the function module, it is only necessary to develop and update the operators in the operator library, further decoupling the algorithm of the function module and achieving a reduced coupling degree among algorithms for intelligent driving functions.

In the prior art, due to the coupling of algorithms for intelligent driving functions across different application scenarios in the application software layer, resulting in that the thread scheduling of the application software layer by the intelligent driving DCU becomes complex. For example, as mentioned above, because the braking algorithm is coupled under the ACC function, it is required to pre-configure information for at least the thread executing the ACC function and the thread executing the braking function based on the application scenario. That is, the thread configuration policy needs to be set based on the application scenario, and a unified process entity needs to be set by the intelligent driving DCU to schedule threads of the algorithm for the intelligent driving function across various application scenarios, resulting in high complexity in thread configuration and scheduling.

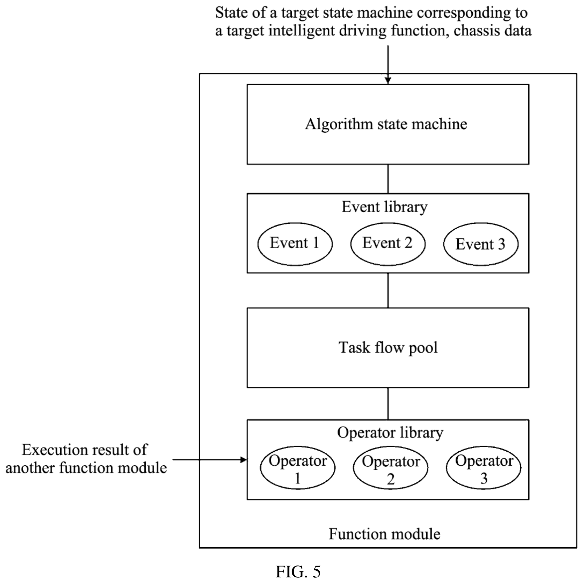

FIG. 5 is a schematic structural diagram of a function module provided in the present application. As shown in FIG. 5, the function module includes an algorithm state machine, an event library, a task flow pool, and an operator library. It should be noted that FIG. 5 only schematically shows the event library including three events and the operator library including three operators.

The aforementioned algorithm state machine is used to switch the state of the function module according to the state of the target state machine and the chassis data.

The aforementioned event library is used to store various events of the function module.

The aforementioned operator library is used to store various operators of the function module.

The aforementioned task flow pool is used to store a task flow to be executed of the function module.

The respective function module of the aforementioned application software layer is set as a process entity, and multiple task flows of the function module are configured as threads of the process entity. By executing the corresponding thread through the task flow of an individual function module, the thread scheduling of the unified process entity corresponding to algorithms for intelligent driving functions is shifted to the thread scheduling with the function module as the process entity, reducing the complexity of thread configuration and scheduling.

Exemplarily, the application framework of the aforementioned autonomous driving computing platform includes a thread configuration policy. The thread configuration policy is used to configure attribute(s) of a thread, for example, it may include a thread name, an occupied memory ratio, a running operating system kernel, etc. In the aforementioned embodiments, the algorithms of individual function modules are partitioned into multiple task flows, and on this basis, the thread configuration policy for task flows of individual function modules can be pre-configured. When the task flow to be executed of the at least one function module corresponding to the target intelligent driving function is executed, the thread corresponding to the task flow is created according to the thread configuration policy, and the thread corresponding to the task flow is executed.

Optionally, the configuration strategy may also include a data reception and publication relationship between task flows. When the thread corresponding to the above task flow is executed, a data callback interface and a publication interface are acquired using a registration callback mechanism and in accordance with the data reception and publication relationship between task flows. Input data for the thread corresponding to the task flow is acquired using the data callback interface, and the thread corresponding to the task flow is executed to obtain output data corresponding to the task flow. Output data corresponding to the task flow is published using the publication interface.

The registration callback mechanism refers to a callback function and a registration function. The callback function (i.e., a publication interface) set in the task flow that needs to publish data, is used to publish the output data of the task flow. The registration function (i.e., a callback interface) set in the task flow that needs to acquire data, is used to invoke the callback function and acquire the data corresponding to the callback function.

Optionally, the application framework of the aforementioned autonomous driving computing platform includes a thread scheduling policy and/or a thread monitoring policy. The scheduling policy is used to configure an execution mode of the thread, for example, it may include an execution priority, a maximum execution time, an identifier of the next thread after this thread, etc. The monitoring policy is used to monitor the execution of the thread, for example, it may include an actual occupied memory ratio of the thread, an actual execution time, etc. When the task flow to be executed of the at least one function module corresponding to the target intelligent driving function is executed, the created thread corresponding to the respective task flow is managed through the thread scheduling policy and/or thread monitoring policy.

According to the method for controlling a vehicle provided in the present application, the corresponding thread information for the task flow of the respective function module may be pre-configured based on the application framework of the autonomous driving computing platform and the individual function modules, without the need to configure thread information considering the application scenario, thus reducing the complexity of thread configuration. Meanwhile, by using the respective function module as a process entity to perform thread scheduling, the complex thread scheduling with a unified process entity is shifted to simple thread scheduling with multiple function modules as process entities, thereby reducing the complexity of thread scheduling.

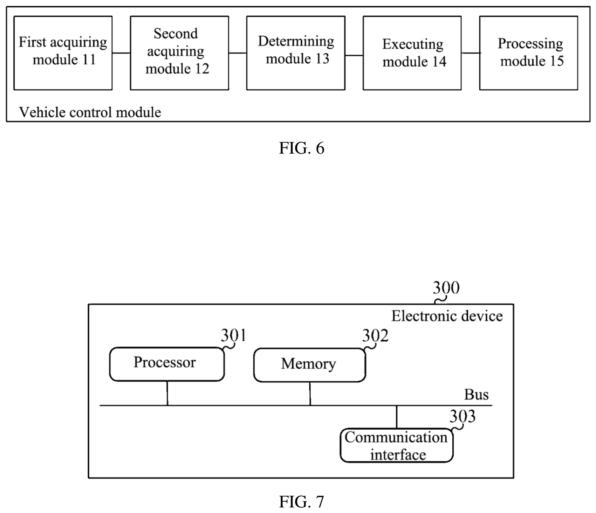

FIG. 6 is a schematic structural diagram of an apparatus for controlling a vehicle provided in the present application. As shown in FIG. 6, the apparatus includes:
a first acquiring module 11, configured to acquire a state of a target state machine corresponding to the target intelligent driving function and chassis data, where the target state machine is a driving state machine or a parking state machine;
a second acquiring module 12, configured to acquire a state of an algorithm state machine of at least one function module corresponding to the target intelligent driving function according to the state of the target state machine and the chassis data, where the state of the algorithm state machine is used to represent a state of the function module;
a determining module 13, configured to determine a task flow to be executed by the function module according to the state of the algorithm state machine;
an executing module 14, configured to execute the task flow to acquire an execution result of the task flow;
a processing module 15, configured to perform intelligent driving according to the execution result of the task flow.

In one possible implementation, the aforementioned determining module 13 is specifically configured to: determine an event to be executed from an event library of the function module according to the state of the algorithm state machine, where an event in the event library includes at least one operator directed graph, where the operator directed graph is used to describe operators required for executing the event and an execution sequence among the operators; and concatenate, according to an operator directed graph included in the event to be executed, identifiers of operators to obtain the task flow to be executed.

In one possible implementation, the aforementioned executing module 14 is specifically configured to invoke operators corresponding to the identifiers of the operators from an operator library according to the identifiers of the operators in the task flow, and execute the operators corresponding to the respective identifiers of the operators of the task flow to acquire the execution result of the task flow.

In one possible implementation, the aforementioned second acquiring module 12 is specifically configured to acquire the state of the algorithm state machine of the at least one function module corresponding to the target intelligent driving function from a state library according to the state of the target state machine and the chassis data, where the state library pre-stores a mapping relationship between the state of the target state machine and the chassis data, and states of algorithm state machines of multiple function modules.

In one possible implementation, the aforementioned executing module 14 is specifically configured to create a thread corresponding to the task flow via a thread configuration policy in an application framework of an autonomous driving computing platform, and execute the thread corresponding to the task flow.

In one possible implementation, a management module 16 is configured to perform a management on the created thread corresponding to the task flow via a thread scheduling policy and/or a thread monitoring policy in the application framework of the autonomous driving computing platform.

In one possible implementation, the thread configuration policy includes a data reception and publication relationship between task flows. The executing module 14 is specifically configured to: acquire a data callback interface and a publication interface using a registration callback mechanism and in accordance with the data reception and publication relationship between task flows; acquire input data for the thread corresponding to the task flow using the data callback interface, and execute the thread corresponding to the task flow to obtain output data corresponding to the task flow; publish the output data corresponding to the task flow using the publication interface.

The apparatus for controlling a vehicle provided in the present application can execute the method for controlling a vehicle in the above method embodiments, the implementation principles and technical effects thereof are similar and will not be repeated here.

FIG. 7 is a schematic structural diagram of an electronic device provided in the present application. As shown in FIG. 7, the electronic device 300 may include: at least one processor 301 and a memory 302. The electronic device may be the aforementioned intelligent driving DCU.

The memory 302 is configured to store a program. Specifically, the program may include a program code, where the program code includes a computer operation instruction.

The memory 302 may include a high-speed RAM memory, and may also include a non-volatile memory (non-volatile memory), such as at least one disk storage device.

The processor 301 is configured to execute the computer-executable instruction stored in the memory 302 to implement the method for controlling a vehicle described in the aforementioned method embodiments. Among them, the processor 301 may be a central processing unit (Central Processing Unit, abbreviated as CPU), or an application specific integrated circuit (Application Specific Integrated Circuit, abbreviated as ASIC), or one or more integrated circuits configured to implement the embodiments of the present application.

The electronic device 300 may further include a communication interface 303, through which it can perform communication interactions with an external device. The external device may be, for example, a computer, a tablet, etc.

In terms of specific implementations, if the communication interface 303, the memory 302, and the processor 301 are implemented independently, the communication interface 303, the memory 302, and the processor 301 may be interconnected via a bus to each other and perform mutual communication. The bus can be an industry standard architecture (Industry Standard Architecture, abbreviated as ISA) bus, a peripheral component interconnect (Peripheral Component, abbreviated as PCI) bus, or an extended industry standard architecture (Extended Industry Standard Architecture, abbreviated as EISA) bus, etc. The bus can be categorized as an address bus, a data bus, a control bus, etc., but it does not mean that there is only one bus or one type of bus.

Alternatively, in terms of specific implementations, if the communication interface 303, the memory 302 and the processor 301 are integrated on a single chip, the communication interface 303, the memory 302 and the processor 301 can complete communication with each other through internal interfaces.

The present application also provides a computer-readable storage medium, the computer-readable storage medium may include: a U disk, a mobile hard disk, a read-only memory (Read-Only Memory, ROM), a random access memory (Random Access Memory, RAM), a magnetic disk, or an optical disk, and other various media that can store a program code. Specifically, the computer-readable storage medium has a computer-executable instruction stored therein, and the computer-executable instruction is used for the method for controlling a vehicle in the aforementioned embodiments.

The present application also provides a computer program product, the program product includes an execution instruction, and the execution instruction is stored in the readable storage medium. At least one processor of the electronic device 300 can read the execution instruction from the readable storage medium, and the execution instruction is executed by the at least one processor to enable the electronic device 300 to implement the method provided by the various implementations described above.

The present application also provides a vehicle, the vehicle is provided with an intelligent driving DCU that is configured to implement the method for controlling a vehicle in the aforementioned embodiments.

The present application also provides a chip, where a computer program is stored on the chip, and when the computer program is executed by the chip, the methods provided in the various implementations are implemented.

The above are only specific embodiments of the present application, but the protection scope of the present application is not limited thereto. Any person skilled in the art, within the technical scope disclosed in the present application, can easily think of changes or substitutions, and such changes or substitutions shall fall within the protection scope of the present application. Therefore, the protection scope of the present application shall be subject to the protection scope of the claims.

## Claims

1. A method for controlling a vehicle, **characterized in that**, the vehicle currently executes a target intelligent driving function to perform intelligent driving, wherein the method comprises:
acquiring a state of a target state machine corresponding to the target intelligent driving function and chassis data, wherein the target state machine is a driving state machine or a parking state machine;
acquiring a state of an algorithm state machine of at least one function module corresponding to the target intelligent driving function according to the state of the target state machine and the chassis data, wherein the state of the algorithm state machine is used to represent a state of the function module;
determining a task flow to be executed by the function module according to the state of the algorithm state machine;
executing the task flow to acquire an execution result of the task flow;
performing intelligent driving according to the execution result of the task flow.

2. The method according to claim 1, wherein determining the task flow to be executed by the target function module according to the state of the algorithm state machine comprises:
determining an event to be executed from an event library of the function module according to the state of the algorithm state machine, wherein an event in the event library comprises at least one operator directed graph, wherein the operator directed graph is used to describe operators required for executing the event and an execution sequence among the operators;
chaining, according to an operator directed graph comprised in the event to be executed, identifiers of operators to obtain the task flow to be executed.

3. The method according to claim 2, wherein executing the task flow to acquire the execution result of the task flow comprises:
invoking operators corresponding to the identifiers of the operators from an operator library according to the identifiers of the operators in the task flow;
executing the operators corresponding to the respective identifiers of the operators of the task flow to acquire the execution result of the task flow.

4. The method according to claim 1, wherein acquiring the state of the algorithm state machine of the at least one function module corresponding to the target intelligent driving function according to the state of the target state machine and the chassis data comprises:
acquiring the state of the algorithm state machine of the at least one function module corresponding to the target intelligent driving function from a state library according to the state of the target state machine and the chassis data, wherein the state library pre-stores a mapping relationship between the state of the target state machine and the chassis data, and states of algorithm state machines of multiple function modules.

5. The method according to any one of claims 1-4, wherein executing the task flow comprises:
creating a thread corresponding to the task flow via a thread configuration policy in an application framework of an autonomous driving computing platform;
executing the thread corresponding to the task flow.

6. The method according to claim 5, wherein the method further comprises:
performing a management on the created thread corresponding to the task flow via a thread scheduling policy and/or a thread monitoring policy in the application framework of the autonomous driving computing platform.

7. The method according to claim 5, wherein the thread configuration policy comprises a data reception and publication relationship between task flows;
wherein executing the thread corresponding to the task flow comprises:
acquiring a data callback interface and a publication interface using a registration callback mechanism and in accordance with the data reception and publication relationship between task flows;
acquiring input data for the thread corresponding to the task flow using the data callback interface, and executing the thread corresponding to the task flow to obtain output data corresponding to the task flow;
publishing the output data corresponding to the task flow using the publication interface.

8. An apparatus for controlling a vehicle, **characterized in that**, the vehicle currently executes a target intelligent driving function to perform intelligent driving, wherein the apparatus comprises:
a first acquiring module, configured to acquire a state of a target state machine corresponding to the target intelligent driving function and chassis data, wherein the target state machine is a driving state machine or a parking state machine;
a second acquiring module, configured to acquire a state of an algorithm state machine of at least one function module corresponding to the target intelligent driving function according to the state of the target state machine and the chassis data, wherein the state of the algorithm state machine is used to represent a state of the function module;
a determining module, configured to determine a task flow to be executed by the function module according to the state of the algorithm state machine;
an executing module, configured to execute the task flow to acquire an execution result of the task flow;
a processing module, configured to perform intelligent driving according to the execution result of the task flow.

9. An electronic device, **characterized in that**, the electronic device comprises: a processor, and a memory communicatively connected with the processor;
wherein the memory stores a computer-executable instruction;
the computer-executable instruction stored in the memory is executed by the processor to implement the method for controlling a vehicle according to any one of claims 1 to 7.

10. A computer-readable storage medium, **characterized in that**, the computer-readable storage medium stores a computer-executable instruction, when the computer-executable instruction is executed by a processor, the method for controlling a vehicle according to any one of claims 1 to 7 is implemented.
